# EUROPÄISCHE PATENTANMELDUNG

(11) **EP 0 992 951 A2**
(43) Veröffentlichungstag der Anmeldung: **12.04.2000**
(21) Anmeldenummer: 99118678.4
(22) Anmeldetag: 22.09.1999
(51) Int. Cl.: G07F 7/00, G07B 15/00

(54) **Verfahren und Fahrzeugnutzungssystem zur jeweiligen individuellen Nutzung von Kraftfahrzeugen durch unterschiedliche Personen**

(30) Priorität: 16.06.1999 DE 19927460; 07.10.1998 DE 19846197
(71) Anmelder: Volkswagen Aktiengesellschaft, 38436 Wolfsburg (DE)
(72) Erfinder: Nachtigall, Andreas, Dipl.-Ing., 38524 Sassenburg (DE)

(57) **Zusammenfassung**

Die Erfindung betrifft ein Verfahren und ein Fahrzeugnutzungssystem zur jeweiligen individuellen Nutzung von Kraftfahrzeugen durch unterschiedliche Personen. Hierbei wird ein Kundenfahrzeugannahme- und Kundenfahrzeugabgabe-Automat (10) einer Kraftfahrzeugwerkstatt zusätzlich zur Abgabe und Annahme und Verwaltung von Car-Sharing-, Miet- oder Fuhrparkkraftfahrzeugen (14) zur individuellen Nutzung derselben verwendet.

## Beschreibung

Die Erfindung betrifft ein Verfahren zur jeweiligen individuellen Nutzung von Kraftfahrzeugen durch unterschiedliche Personen, gemäß dem Oberbegriff des Anspruchs 1. Die Erfindung betrifft ferner ein Fahrzeugnutzungssystem zur jeweiligen individuellen Nutzung von Kraftfahrzeugen durch unterschiedliche Personen, gemäß dem Oberbegriff des Anspruchs 9.

Zur Entlastung der Umwelt von Abgasen, zur verkehrsmäßigen Entlastung von Innenstädten und zur kostengünstigen Nutzung von Kraftfahrzeugen durch mehrere Personen sind bereits sogn. Car-Sharing-Konzepte bekannt, bei denen, wie beispielsweise aus der DE 44 29 852 A1 bekannt, Fahrzeuge eines Fuhrparks an mehreren Haltestellen vorgehalten und mittels eines Automaten an den jeweiligen Haltestellen an Nutzer zur zeitweisen individuellen Nutzung übergeben werden. Dies hat jedoch den Nachteil, daß beispielsweise wegen der vorhandenen Parkplatznot in Ballungszentren nur wenige Haltestellen zur Verfügung stehen.

Die DE 42 27 969 beschreibt ein System zur Mehrfachnutzung von Kraftfahrzeugen, bei dem die Fuhrparkfahrzeuge an jedem beliebigen Ort innerhalb eines vorbestimmten Bereichs abgestellt werden und von einem nächsten Nutzer übernommen werden können. Dies hat jedoch den Nachteil, daß keine spontane Nutzung möglich ist, da jeweilige momentane Abholorte für die Fuhrparkfahrzeuge nicht vorhersehbar sind. Daher muß immer zunächst die Standortsituation des Fuhrparks geprüft und ggf. ein Fahrzeug reserviert werden.

Beide vorgenannten System haben den Nachteil, daß nur Mitglieder einer jeweiligen Car-Sharing-Organisation Fuhrparkfahrzeuge nutzen können.

Der vorliegenden Erfindung liegt daher die Aufgabe zugrunde, eine verbessertes Verfahren der obengenannten Art sowie ein verbessertes Fahrzeugnutzungssystem der o.g. Art zur Verfügung zu stellen, wobei die obengenannten Nachteile überwunden werden und eine einfache und spontane Nutzung von Fuhrparkfahrzeugen zur Verfügung steht.

Diese Aufgabe wird erfindungsgemäß durch ein Verfahren der o.g. Art mit den in Anspruch 1 gekennzeichneten Merkmalen und durch ein Fahrzeugnutzungssystem der o.g. Art mit den in Anspruch 9 gekennzeichneten Merkmalen gelöst. Vorteilhafte Ausgestaltungen der Erfindung sind in den abhängigen Ansprüchen angegeben.

Dazu ist es bei dem Verfahren der o.g. Art erfindungsgemäß vorgesehen, daß ein Kundenfahrzeugannahme- und Kundenfahrzeugabgabe-Automat einer Kraftfahrzeugwerkstatt zusätzlich zur Abgabe und Annahme und ggf. Verwaltung von Kraftfahrzeugen zur individuellen Nutzung derselben verwendet wird.

Dies hat den Vorteil, daß eine gemeinsame Nutzung von Kraftfahrzeugen beispielsweise eines Fuhrparks durch verschiedene Personen auch an Kraftfahrzeugwerkstätten realisierbar ist, ohne, daß dort aufwendige und kostenintensive Hardware installiert werden muß. Vielmehr können vorhandenen Systemressourcen eine zusätzliche Funktion implementiert und genutzt werden, wodurch auch eine spontane Nutzung von Kraftfahrzeugen ohne vorherige Anmeldung möglich ist. Durch ein flächendeckendes Netz von Kraftfahrzeugwerkstätten mit Kundenfahrzeugannahme- und Kundenfahrzeugabgabe-Automat kann ein entsprechend dichtes Netz von Ausgabestationen für Car-Sharing-, Miet- und Fuhrparkfahrzeuge installiert werden.

Für eine sofortige oder spätere Abrechnung der jeweiligen individuellen Nutzung eines Kraftfahrzeugs werden nutzungsrelevante Daten, insbesondere Kilometerstand, Kraftstoffverbrauch, Datum und Uhrzeit vor bzw. nach der Nutzung, von dem Kraftfahrzeug an den Kundenfahrzeugannahme- und Kundenfahrzeugabgabe-Automaten übertragen.

Bei einem Verfahren mit sofortiger Abrechnung der Fahrzeugnutzung wird ein Nutzungsentgelt einer individuellen Nutzung bei der Rückgabe des Fahrzeugs berechnet und angezeigt.

Zweckmäßigerweise, aber nicht notwendigerweise wird eine Bezahlung einer individuellen Nutzung bei der Abgabe des Kraftfahrzeugs am Kundenfahrzeugannahme- und Kundenfahrzeugabgabe-Automat durchgeführt.

Zum Vermeiden von Mißbrauch wird eine Prüfung, ob ein Abholer zum Führen eines gewünschten Kraftfahrzeugs berechtigt ist, vom Kundenfahrzeugannahme- und Kundenfahrzeugabgabe-Automat durchgeführt. Die Prüfung wird beispielsweise durch Abtasten einer Fahrerlaubnis oder Eingabe einer Führerscheinnummer durchgeführt.

Eine Nutzung von Car-Sharing-, Miet- oder Fuhrparkfahrzeugen auch für Personen, die keiner Car-Sharing-, miet- oder fuhrparkbetreibenden Organisation beigetreten sind, wird durch eine Identifizierung des Nutzers beispielsweise über Kreditkarte, Führerschein oder Personalausweis möglich. So wird beispielsweise durch Rückfrage bei der Datenbank in Flensburg der Führerscheinnummer eine Führerscheinbesitzer bzw. dessen Name zugeordnet. Alternativ wird ein Fingerabdruck überprüft, eine Spracherkennung durchgeführt oder es werden persönliche Daten des Nutzers zufällig abgefragt.

Ferner ist zur Lösung der obigen Aufgabe bei dem Fahrzeugnutzungssystem der o.g. Art erfindungsgemäß zur Abgabe und Annahme von Kraftfahrzeugen zur individuellen Nutzung derselben in einem Kundenfahrzeugannahme- und Kundenfahrzeugabgabe-Automat einer Kraftfahrzeugwerkstatt ein zusätzliches Softwaremodul und/oder ein zusätzliches oder modifiziertes Hardwaremodul vorgesehen.

Dies hat den Vorteil, daß ein bereits vorhandenes Netz von Kraftfahrzeugwerkstätten mit Automaten zusätzlich zur Ausgabe und Rücknahme von Kraftfahrzeugen zur Verfügung steht, so daß auch eine spontane Nutzung von Fahrzeugen beispielsweise eines Fuhrparks, ohne notwendigerweise Mitglied in einer entsprechenden, den Fuhrpark betreibenden Organisation zu sein, möglich ist. Vertragsinhalte zwischen einem Nutzer und einem Fuhrparkanbieter können direkt am Kundenfahrzeugannahme- und Kundenfahrzeugabgabe-Automat vereinbart werden.

Für eine spätere oder sofortige Abrechnung der jeweiligen individuellen Nutzung eines Kraftfahrzeugs weist jedes Kraftfahrzeug ein Erfassungsmittel, beispielsweise einen Bordcomputer, auf welches nutzungsrelevante Daten, insbesondere Kilometerstand, Kraftstoffverbrauch, Datum und/oder Uhrzeit, vor bzw. nach der Nutzung, speichert und an den Kundenfahrzeugannahme- und Kundenfahrzeugabgabe-Automat überträgt.

Beispielsweise ist das zusätzliche Softwaremodul eine Car-Sharing- oder Vermiet-Software.

Zweckmäßigerweise weist der Kundenfahrzeugannahme- und Kundenfahrzeugabgabe-Automat zur sofortigen Bezahlung einer individuellen Nutzungen zusätzlich ein Abrechnungsmodul auf Das Abrechnungsmodul umfaßt dabei beispielsweise ein Kreditkartensystem, ein Bargeldsystem, Rechnungsdruckersystem und/oder ein Scheckkartensystem.

Zur individuellen Prüfung der Berechtigung eines Abholers, ein Kraftfahrzeug zu führen, weist der Kundenfahrzeugannahme- und Kundenfahrzeugabgabe-Automat ferner ein Fahrerlaubnisabtastmodul oder ein Eingabemodul zur Eingabe einer Fahrerlaubnisnummer auf.

Eine Nutzung von Car-Sharing-, Miet- oder Fuhrparkfahrzeugen auch für Personen, die keiner Car-Sharing-, miet- oder fuhrparkbetreibenden Organisation beigetreten sind, wird durch eine Identifizierung des Nutzers beispielsweise über Kreditkarte, Führerschein oder Personalausweis möglich.

Eine Reservierung eines Fahrzeuges erfolgt beispielsweise über Internet, per Fax oder direkt an dem Kundenfahrzeugannahme- und Kundenfahrzeugabgabe-Automat.

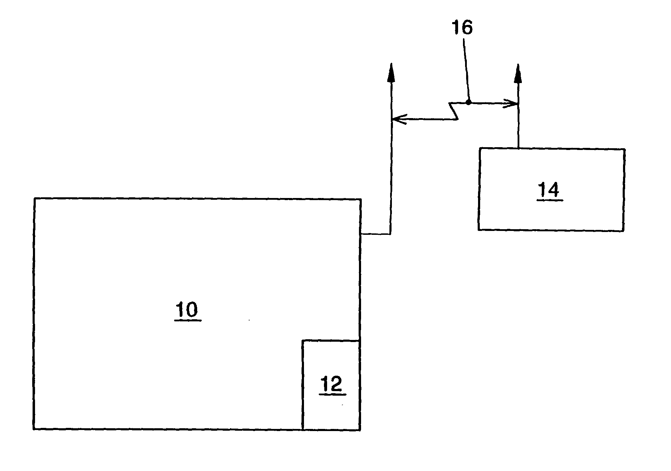

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Figur ein Blockschaltbild einer bevorzugten Ausführungsform eines erfindungsgemäßen Fahrzeugnutzungssystems.

Zur jeweiligen individuellen Nutzung von Fuhrparkfahrzeugen, insbesondere Kraftfahrzeugen, durch unterschiedliche Personen, was auch als "Car-Sharing" bezeichnet wird, erhält ein Kundenfahrzeugannahme- und Kundenfahrzeugabgabe-Automat 10 einer Kraftfahrzeugwerkstatt ein zusätzliches Softwaremodul 12, beispielsweise eine entsprechend angepaßte Car-Sharing-Software.

Entsprechende Fuhrparkfahrzeuge 14 sind beispielsweise mit einem Bordcomputer ausgestattet, welcher insbesondere über eine drahtlose Verbindung 16 mit dem jeweiligen Kundenfahrzeugannahme- und Kundenfahrzeugabgabe-Automaten kommuniziert und nutzungsrelevante Daten, wie beispielsweise Kilometerstand, Datum und Uhrzeit vor bzw. nach der Nutzung, speichert und für eine spätere Abrechnung überträgt.

Auf diese Weise dient der Kundenfahrzeugannahme- und Kundenfahrzeugabgabe-Automat 10 der Kraftfahrzeugwerkstatt nicht nur der Annahme und Abgabe von in der Wertstatt zu wartenden oder zu reparierenden Kraftfahrzeugen, sondern gleichzeitig der Nutzung eines Car-Sharing-, Miet- oder Fahrzeugfuhrparkes durch unterschiedliche Personen. Da viele Kraftfahrzeugwerkstätten bereits mit einem Kundenfahrzeugannahme- und Kundenfahrzeugabgabe-Automaten ausgerüstet sind oder dies in kürze werden, steht ohne großen Mehraufwand, insbesondere ohne zusätzlichen Hardwareaufwand, ein hohe Anzahl von Abgabe- und Annahmestationen für Fuhrparkfahrzeuge zur Verfügung.

Die Verwendung des Kundenfahrzeugannahme- und Kundenfahrzeugabgabe-Automaten 10 erfolgt beispielsweise wie folgt: Ein Interessierter Nutzer begibt sich zu einer entsprechenden Kraftfahrzeugwerkstatt und verschafft sich beispielsweise über eine EC-, Kredit- oder Kundenkarte Zugang zu einem Vorraum, in dem sich der Kundenfahrzeugannahme- und Kundenfahrzeugabgabe-Automat 10 befindet. Er wählt beispielsweise auf einem Soft-Touch-Bildschirm die Option "Ausleihen eines Car-Sharing Fahrzeuges" aus. Anschließend wird er beispielsweise aufgefordert, sich über seine Karte und eine entsprechende Geheimnummer auszuweisen. Nach der Eingabe wird nach dem gewünschten Fahrzeug gefragt. Ist das Fahrzeug verfügbar, werden die vertraglichen Aspekte, wie beispielsweise Führerscheinbesitz, einzeln abgefragt. Ggf. ist der Führerschein auf Verlangen einem Erkennungssystem vorzuzeigen.

Alternativ erfolgt vorab eine Registrierung des Nutzers für alle zukünftigen Nutzungen von Fahrzeugen, wobei alle Vertragsangelegenheiten bei dieser Registrierung durchgeführt werden. Diese Registrierung erfolgt beispielsweise am Kundenfahrzeugannahme- und Kundenfahrzeugabgabe-Automaten 10, telefonisch oder über Internet. Bevorzugt ist zur Registrierung eine Spracherkennung, auf Wunsch in verschiedenen Sprachen, mit computergesteuerter Menüführung vorgesehen, welche sowohl am Kundenfahrzeugannahme- und Kundenfahrzeugabgabe-Automaten 10 als auch bei telefonischer Registrierung Verwendung findet. Diese Registrierung als Dauernutzer kann ggf. von Zeit zu Zeit wiederholt werden.

Sind die Eingaben in Ordnung, wird beispielsweise ein dem Kundenfahrzeugannahme- und Kundenfahrzeugabgabe-Automaten 10 zugeordnetes Schließfach, welches einen Schlüssel des gewünschten Kraftfahrzeuges enthält, geöffnet und der Nutzer kann das Fahrzeug nutzen. Gleichzeitig kann eine elektronische Sicherung an einem Zusatzschlüssel entriegelt werden. Vor und nach der Nutzung werden abrechnungsrelevante Daten beispielsweise durch einen den im Fuhrparkfahrzeug 14 installierten Bordcomputer aufgezeichnet und über die Funkverbindung 16 an den Kundenfahrzeugannahme- und Kundenfahrzeugabgabe-Automaten 10 übertragen. Alternativ erfolgt diese Datenübertragung beispielsweise über den Zusatzschlüssel bei Rückgabe des Fuhrparkfahrzeugs.

Bei der Rückgabe wird nach einer vom Nutzer gewünschten Bezahlungsart gefragt. Neben einer Barzahlung, Rechnungsstellung oder Abbuchung ist auch eine Bezahlung mit einer Kreditkarte vorgesehen.

Durch die Kombination des Kundenfahrzeugannahme- und Kundenfahrzeugabgabe-Automaten 10 mit der Car-Sharing-Software 12 steht ein Fahrzeugnutzungssystem mit der Möglichkeit einer spontanen Nutzung von Fuhrparkfahrzeugen zur Verfügung. Der Nutzer muß vorher keiner entsprechenden Car-Sharing-Organisation oder ähnlichem beigetreten sein. Eine Vorabreservierung von Fuhrparkfahrzeugen erfolgt optional zusätzlich über Internet, Fax oder einfach telefonisch. Das vorbestellte Fuhrparkfahrzeug wird für den reservierten Zeitraum für andere Nutzer gesperrt.

Entsprechende vertragliche Regelungen werden zwischen dem Anbieter des Fuhrparks und dem Nutzer über spezielle, sequentielle Abfragen am Kundenfahrzeugannahme- und Kundenfahrzeugabgabe-Automaten 10 mittels jeweiliger Einzelbestätigungen oder einer einzigen gemeinsamen Bestätigung durch den Nutzer vereinbart und beispielsweise mittels Eingabe der Geheimnummer bestätigt. Die Abfrage einer gültigen Fahrerlaubnis erfolgt alternativ über eine Eingabe einer Fahrerlaubnisnummer, wobei eine entsprechende Rückfrage in einer Kartei, wie beispielsweise in der Flensburger Verkehrsdatei, zur Prüfung der Gültigkeit der Fahrerlaubnis erfolgt. Optional erfolgt eine Überprüfung von den Nutzer identifizierenden Dokumenten über ein entsprechendes Erkennungssystem.

Mittels der Kundenfahrzeugannahme- und Kundenfahrzeugabgabe-Automaten 10 an den verschiedenen Stellen können mehrere Standorte verwaltet werden. Es erfolgt beispielsweise eine Einwahl von einem ersten Standort in einen Kundenfahrzeugannahme- und Kundenfahrzeugabgabe-Automaten 10 an einem anderen Standort. Dort kann abgefragt werden, ob ein gewünschtes Fahrzeug vorhanden und ob ein Fahrzeugtausch möglich ist. Ferner kann mit Hilfe der einen Kundenfahrzeugannahme- und Kundenfahrzeugabgabe-Automaten 10 eine Rückführung von Fahrzeugen zu einem Standort organisiert werden, welche an einem anderen als dem Abholstandort zurückgegeben werden.

Bei der Berechnung des Nutzungsentgeltes ist optional eine Kombination mit dem tatsächlichen Energieverbrauch, also beispielsweise dem Kraftstoffverbrauch, vorgesehen, so daß eine sparsame Fahrweise zu einem günstigeren Nutzungsentgelt führt und somit ein Anreiz für eine sparsame Fahrweise besteht. Ferner sind optional sogen. Bonuskarten vorgesehen, deren Wertinhalt nach und nach durch entsprechende Fahrzeugnutzung verbraucht wird. Zweckmäßigerweise ist eine Kombination mit anderen Mobilitätsanbietem, wie beispielsweise öffentlicher Nah- und Fernverkehr, Kfz-Vermieter, ÖPNV-Betreiber oder Fluggesellschaften vorgesehen. Die Kundenfahrzeugannahme- und Kundenfahrzeugabgabe-Automaten 10 sind zum Verarbeiten von verschiedenen Währungen ausgelegt.

Mittels einer GPS-Ortung in den Fahrzeugen kann eine Standorterkennung und Gebietsbegrenzung eingeführt werden. Bei einem Fälligen Inspektionstermin erfolgt eine Registrierung und Online-Übertragung, wobei sich ein Händler mit dem Nutzer in Verbindung setzt. Ferner erfolgt eine Online-Übertragung an einen Dienstleister, wann das Fahrzeug wieder betankt werden muß. Mittels einer im Fahrzeug integrierten Telematikanwendung ist ein System zur Ferndiagnose und zum Pannenservice realisierbar.

Optional ist zusätzlich eine Bereitschaftsfahrer vorgesehen, welcher einen Nutzer zu den Fuhrparks befördert, so daß auch Nutzer mit großen Entfernungen zu den Fuhrparks diesen Service nutzen können.

### BEZUGSZEICHENLISTE

- 10: Kundenfahrzeugannahme- und Kundenfahrzeugabgabe-Automat
- 12: Softwaremodul
- 14: Fuhrparkfahrzeuge
- 16: drahtlose Verbindung

## Patentansprüche

1. Verfahren zur jeweiligen individuellen Nutzung von Kraftfahrzeugen durch unterschiedliche Personen,
dadurch gekennzeichnet, daß
ein Kundenfahrzeugannahme- und Kundenfahrzeugabgabe-Automat einer Kraftfahrzeugwerkstatt zusätzlich zur Abgabe und Annahme von Kraftfahrzeugen zur individuellen Nutzung derselben verwendet wird.

2. Verfahren nach Anspruch 1,
dadurch gekennzeichnet, daß
nutzungsrelevante Daten, insbesondere Kilometerstand, Kraftstoffverbrauch, Datum und Uhrzeit vor bzw. nach der Nutzung, von dem Kraftfahrzeug an den Kundenfahrzeugannahme- und Kundenfahrzeugabgabe-Automaten übertragen werden.

3. Verfahren nach Anspruch 1 oder 2,
dadurch gekennzeichnet, daß
ein Nutzungsentgelt einer individuellen Nutzung bei der Rückgabe des Kraftfahrzeugs berechnet und angezeigt wird.

4. Verfahren nach einem der vorhergehenden Ansprüche,
dadurch gekennzeichnet, daß
eine Bezahlung einer individuellen Nutzung bei der Abgabe des Kraftfahrzeugs am Kundenfahrzeugannahme- und Kundenfahrzeugabgabe-Automat, insbesondere gegen Rechnung oder auf Kreditkarte, durchgeführt wird.

5. Verfahren nach einem der vorhergehenden Ansprüche,
dadurch gekennzeichnet, daß
eine Prüfung, ob ein Abholer zum Führen eines gewünschten Kraftfahrzeugs berechtigt ist, vom Kundenfahrzeugannahme- und Kundenfahrzeugabgabe-Automat durchgeführt wird.

6. Verfahren nach Anspruch 5,
dadurch gekennzeichnet, daß
die Prüfung durch Abtasten einer Fahrerlaubnis, eines Personalausweises, eines Fingerabdruckes, eines Sprachmusters, durch Eingabe einer Führerscheinnummer, welche über einer Datenbank einem Führerscheinbesitzer zugeordnet wird, oder durch zufällige Abfrage von persönlichen Daten durchgeführt wird.

7. Verfahren nach Anspruch 5,
dadurch gekennzeichnet, daß
als Fahrzeuge Car-Sharing-, Miet- und/oder Fuhrparkfahrzeuge gewählt werden.

8. Verfahren nach einem der vorhergehenden Ansprüche,
dadurch gekennzeichnet, daß
eine Reservierung eines Fahrzeuges über Internet, per Fax oder direkt an dem Kundenfahrzeugannahme- und Kunbdenfahrzeugabgabe-Automat erfolgt.

9. Fahrzeugnutzungssystem zur jeweiligen individuellen Nutzung von Kraftfahrzeugen (14) durch unterschiedliche Personen,
dadurch gekennzeichnet, daß
zur Abgabe und Annahme von Kraftfahrzeugen (14) zur individuellen Nutzung derselben in einem Kundenfahrzeugannahme- und Kundenfahrzeugabgabe-Automat (10) einer Kraftfahrzeugwerkstatt ein zusätzliches Softwaremodul (12) und/oder ein zusätzliches oder modifiziertes Hardwaremodul vorgesehen ist.

10. Fahrzeugnutzungssystem nach Anspruch 9,
dadurch gekennzeichnet, daß
jedes Kraftfahrzeug (12) ein Erfassungsmittel, insbesondere einen Bordcomputer, aufweist, welches nutzungsrelevante Daten, insbesondere Kilometerstand, Kraftstoffverbrauch, Datum und/oder Uhrzeit, vor bzw. nach der Nutzung, speichert und an den Kundenfahrzeugannahme- und Kundenfahrzeugabgabe-Automat (10) überträgt.

11. Fahrzeugnutzungssystem nach Anspruch 9 oder 10,
dadurch gekennzeichnet, daß
das zusätzliche Softwaremodul (12) eine Car-Sharing- oder Vermiet-Software ist.

12. Fahrzeugnutzungssystem nach einem der Ansprüche 9 bis 11,
dadurch gekennzeichnet, daß
der Kundenfahrzeugannahme- und Kundenfahrzeugabgabe-Automat (10) zusätzlich ein Abrechnungsmodul zur Bezahlung einer individuellen Nutzung aufweist.

13. Fahrzeugnutzungssystem nach Anspruch 12,
dadurch gekennzeichnet, daß
das Abrechnungsmodul ein Kreditkartensystem, ein Bargeldsystem, ein Rechnungsdruckersystem und/oder ein Scheckkartensystem umfaßt.

14. Fahrzeugnutzungssystem nach einem der Ansprüche 9 bis 13,
dadurch gekennzeichnet, daß
der Kundenfahrzeugannahme- und Kundenfahrzeugabgabe-Automat (10) ferner ein Fahrerlaubnisabtastmodul oder ein Eingabemodul zur Eingabe einer Fahrerlaubnisnummer aufweist.

15. Fahrzeugnutzungssystem nach einem der Ansprüche 9 bis 14,
dadurch gekennzeichnet daß
das Kraftfahrzeug ein Car-Sharing-, Miet- und/oder Fuhrparkfahrzeug ist.
